# EUROPÄISCHE PATENTANMELDUNG

(11) **EP 4 012 738 A1**
(43) Veröffentlichungstag der Anmeldung: **15.06.2022**
(21) Anmeldenummer: 22150608.2
(22) Anmeldetag: 06.04.2016
(51) Int. Cl.: H01H 9/54, H01H 33/59

(54) **SCHALTEINRICHTUNG**

(30) Priorität: 05.05.2015 DE 102015208272; 22.12.2015 DE 102015226475
(62) Teilanmeldung aus: 16164080.0
(71) Anmelder: Siemens Aktiengesellschaft, 80333 München (DE)
(72) Erfinder: Adlhoch, Manfred, 93170 Bernhardswald (DE); Kleemeier, Manfred, 93073 Neutraubling (DE)

(57) **Zusammenfassung**

Die Erfindung betrifft eine Schalteinrichtung für elektrische Stromkreise, insbesondere für Schalter für Niederspannungsanlagen, aufweisend eine Serienschaltung eines mechanischen Schaltelementes, das Schaltkontakte zur Trennung des elektrischen Stromkreises aufweist, und eines elektronischen Schaltelementes, das mit Halbleitern ausgeführt ist, die beide mit einer Steuereinrichtung verbunden sind, die derart ausgestaltet ist, dass bei einem Einschaltvorgang zuerst die Schaltkontakte des mechanischen Schaltelementes geschlossen werden und anschließend das elektronische Schaltelement leitend wird, dass bei einem Ausschaltvorgang zuerst das elektronische Schaltelement den Stromfluss reduziert und anschließend das mechanische Schaltelement die Schaltkontakte öffnet.

## Beschreibung

Die Erfindung betrifft eine Schalteinrichtung für elektrische Stromkreise, insbesondere für Schalter für Niederspannungsanlagen.

Schalter, Schaltgeräte bzw. Schutzschaltgeräte, wie Fehlerstromschutzschalter, Leitungsschutzschalter, Leistungsschutzschalter, Motorschutzschalter oder Brandschutzschalter, werden zunehmend für den Gleichstrom bzw. Gleichspannungsbereich, im englischen mit DC bezeichnet, benötigt, insbesondere für den Bereich Photovoltaik, Server-Anlagen oder Beleuchtung.

Schalter bzw. Installations-Schaltgeräte dienen in elektrischen Stromkreisen bzw. Installationsanlagen dem Leitungs- und/oder Brand- und/oder Personenschutz. Die sogenannten Leitungsschutzschalter, kurz LS oder im Englischen MCB, bzw. Leistungsschalter, kurz MCCB, unterbrechen den Stromfluss durch die überwachte Leitung bei Auftreten von Überstrom oder eines Kurzschlussstromes. Sie umfassen dazu thermische und elektromagnetische Auslöser sowie ein oder mehrere Schaltschlösser mit einem Kontaktsystem, die bei Auslösung durch einen der Auslöser den Strompfad zwischen Eingangs- und Ausgangsklemmen unterbrechen. Weiterhin sind Brandschutzschalter bekannt, kurz AFDD bzw. Arc Fault Detection Device, die zum Brandschutz gegen serielle und/oder parallele Fehlerlichtbögen aufgrund von beispielsweise Isolationsfehlern dienen. Darüber hinaus sind Fehlerstromschutzschalter bekannt, kurz FI-Schalter oder im Englischen RCD: Residual Current Device bzw. RCCB: Residual Current Circuit Breaker, die zum Personenschutz und/oder Brandschutz dienen. Ein Fehlerstrom tritt dann auf, wenn die Summe der aus der Anlage zurückfließenden Ströme kleiner als die Summe der in die Anlage hineinfließenden Ströme ist. Die Differenz davon fließt somit als Fehlerstrom über Erde (PE) ab. Die FI-Schutzschalter umfassen eine Einrichtung zur Fehlerstromerkennung, die bei Auftreten eines solchen einen Auslöser veranlasst, den Strompfad zwischen Eingangs- und Ausgangsanschlüssen bzw. -klemmen zu unterbrechen.

Das Schalten von Gleichstrom erfordert die Berücksichtigung zusätzlicher Sicherheitsaspekte, insbesondere bei der Dimensionierung des Kontaktsystems. Besonders die Gefahr des Lichtbogens bzw. Lichtbogenlaufes in Verbindung mit höheren Gleichspannungen/-strömen ist bedeutsam und führt zu i.d.R. aufwendigen Kontaktsystemen und Lichtbogenlöschkammern. Ferner sind insbesondere für den Schutz gegen elektrischen Schlag kurze Abschaltzeiten, bis zu kleiner als 40 ms erforderlich. Dabei ist in Gleichstrom-Systemen das rasche Löschen des Lichtbogens eine besonders kritische Aufgabe. Zusätzlich ist für Schutzschaltgeräte nach dem Öffnen eine Trennstrecke gefordert.

In Wechselstrom-Systemen, im englischen mit AC bezeichnet, können beim Einschalten von EMV-Filtern, mit entsprechenden Kapazitäten vom jeweiligen Außenleiter (L1, L2, L3) gegen den Schutzleiter (PE-Leiter), durch ungleichmäßige Kontaktgabe der einzelnen Außenleiter beim Ein- bzw. Zuschalten mittels mechanischer Schalter oder elektromechanischer Schalter (z.B. Schütz) hohe transiente Ableitströme gegen den Schutzleiter (PE-Leiter) entstehen. Dies kann insbesondere beim Einsatz von Fehlerstrom-Schutzeinrichtungen zu unerwünschten Auslösungen beim Einschalten führen. EMV-Filter werden i.d.R. in allen elektronischen Geräten mit Schaltnetzteilen verwendet, um EMV-Richtlinien bzw. -Vorgaben einzuhalten. Zudem besitzen v.a. auch Antriebsumrichter, wie Frequenzumrichter-Antriebe spezielle EMV-Filter zum Kompensation von parasitären Kapazitäten, wie z.B. langen Motorzuleitungen.

Aufgabe der vorliegenden Erfindung ist es, dass Schalten von Gleich- oder/und Wechselströmen zu verbessern.

Diese Aufgabe wird durch eine Schalteinrichtung mit den Merkmalen des Patentanspruchs 1, einen Fehlerstromschutzschalter mit den Merkmalen des Patentanspruchs 13, einen Leitungsschutzschalter mit den Merkmalen des Patentanspruchs 14, einen Leistungsschalter mit den Merkmalen des Patentanspruchs 15, einen Brandschutzschalter mit den Merkmalen des Patentanspruchs 16 oder einen Motorschutzschalter mit den Merkmalen des Patentanspruchs 17 gelöst.

Erfindungsgemäß wird eine Schalteinrichtung für elektrische Stromkreise, insbesondere für Schalter für Niederspannungsanlagen, wobei mit Niederspannung eine Spannung von bis zu 1000 Volt Wechselspannung oder bis zu 1500 Volt Gleichspannung gemeint ist, vorgeschlagen. Erfindungsgemäß weist die Schalteinrichtung eine Serienschaltung
- eines mechanischen Schaltelementes, das Schaltkontakte zur Trennung des elektrischen Stromkreises aufweist, und
- eines elektronischen Schaltelementes, das mit Halbleitern ausgeführt ist,
auf. Beide sind mit einer Steuereinrichtung verbunden, die derart ausgestaltet ist, dass bei einem Einschaltvorgang zuerst die Schaltkontakte des mechanischen Schaltelementes geschlossen werden und anschließend das elektronische Schaltelement leitend bzw. niederohmig bzw. geschlossen wird. D.h. vor dem Einschaltvorgang sind die Schaltkontakte des mechanischen Schaltelementes geöffnet als auch das elektronische Schaltelement hochohmig bzw. nichtleitend bzw. geöffnet.

Bei einem Ausschaltvorgang wird zuerst das elektronische Schaltelement hochohmig bzw. geöffnet bzw. reduziert den Stromfluss bzw. geht in den nichtleitenden Zustand und anschließend öffnet das mechanische Schaltelement die Schaltkontakte.

Dies hat den besonderen Vorteil, dass Lichtbögen, die durch das Schalten mechanischer Schaltelemente, insbesondere durch das öffnen der Kontakte entstehen, vermieden bzw. reduziert werden, da das elektronische Schaltelement den Stromfluss reduziert bzw. unterbricht. Dies ist insbesondere beim Schalten von Gleichströmen von Vorteil, da ein Lichtbogen hier nicht automatisch erlischt, im Vergleich zu Wechselstrom.

Vorteilhafte Ausgestaltungen der Erfindung sind in den Unteransprüchen angegeben.

In einer vorteilhaften Ausgestaltung der Erfindung öffnet bei einem Ausschaltvorgang zuerst das mechanische Schaltelement die Schaltkontakte und anschließend wird das elektronische Schaltelement (S1) hochohmig wird. Dies hat den besonderen Vorteil, dass das elektronische Schaltelement dazu verwendet wird, um beim Abschaltvorgang den üblicherweise entstehenden Lichtbogen im mechanischen Schaltelement zu beherrschen und durch das elektronische Schaltelement zu löschen.

In einer vorteilhaften Ausgestaltung der Erfindung öffnen oder/und schließen die Schaltelemente (S1, S2) mit einem Zeitversatz. Beispielsweise mit einem definierbaren, fest eingestellten oder einstellbaren Zeitversatz. Hierzu ist ein Zeitversatz, d.h. eine Verzögerungszeit t im Millisekundenbereich, beispielsweise im Bereich 1 bis 1000 ms oder 1 bis 100 ms vorgesehen. D.h. z.B. bei einem Ausschaltvorgang wird zuerst das elektronische Schaltelement hochohmig und nach dem Zeitversatz öffnen die Schaltkontakte des mechanischen Schaltelementes. Alternativ bei einem Ausschaltvorgang öffnen zuerst die mechanischen Kontakte und nach dem Zeitversatz wird das elektronische Schaltelement hochohmig.

In analoger Weise bei einem Einschaltvorgang. Dies hat den besonderen Vorteil, dass z.B. das elektronische Schaltelement den Schaltvorgang des mechanischen Schaltelements kontrolliert bzw. unterstützt. Die Lichtbogenbelastung am mechanischen Schaltelement kann somit verringert werden.

In einer vorteilhaften Ausgestaltung der Erfindung ist der Stromkreis ein Dreiphasen-Wechselstromkreis, pro Phase ist eine Serienschaltung eines mechanischen und eines elektronischen Schaltelementes vorgesehen, die mit einer oder mehreren Steuereinrichtungen verbunden sind, die derart ausgestaltet ist/sind, dass bei einem Einschaltvorgang zuerst die Schaltkontakte der mechanischen Schaltelemente für alle Phasen geschlossen werden und anschließend die elektronischen Schaltelemente aller Phasen synchron leitend werden, d.h. die elektronischen Schaltelemente werden gleichzeitig geschlossen, dass bei einem Ausschaltvorgang zuerst die elektronischen Schaltelemente den Stromfluss aller Phasen synchron reduzieren, d.h. hochohmig werden, und anschließend die mechanischen Schaltelemente aller Phasen die Schaltkontakte öffnen. Dies hat den besonderen Vorteil, dass ein unsymmetrisches zeitversetztes Schließen der Kontakte der einzelnen Phasen bzw. Außenleiter vermieden wird, so dass transiente Ableitströme vermieden werden, so dass ein "fehlerhaftes" Abschalten möglicher weiterer Schutzeinrichtungen vermieden wird.

In einer vorteilhaften Ausgestaltung der Erfindung sind alle Schaltelemente mit einer Steuereinrichtung verbunden. Dies hat den besonderen Vorteil, dass nur eine Steuereinrichtung vorgesehen ist, die den kompletten Steuervorgang übernimmt. Dadurch ist eine einfache und kompakte Realisierung möglich.

In einer vorteilhaften Ausgestaltung der Erfindung weist der Neutralleiter eine Serienschaltung eines mechanischen und eines elektronischen Schaltelementes auf und die Steuereinrichtung ist derart ausgestaltet, dass der Neutralleiter in analoger Weise geschaltet wird. Dies hat den besonderen Vorteil, dass der Neutralleiter den Schaltvorgang mit unterstützt und eine Lichtbogenbelastung bzw. die Schaltbelastung verringert wird.

In einer vorteilhaften Ausgestaltung der Erfindung ist der Stromkreis ein Einphasen-Wechselstromkreis, mit einem N-Leiter (Neutralleiter). Der Neutralleiter (N), kurz N-Leiter, weist dabei eine Serienschaltung eines mechanischen und eines elektronischen Schaltelementes auf und die Steuereinrichtung ist derart ausgestaltet, dass der Neutralleiter mit einem Zeitversatz zum anderen Leiter geschaltet werden kann.

Der N-Leiter kann dabei mittels einer definierten bzw. minimalen Vorlaufzeit zu dem anderen Leiter bzw. Phasenleiter (L) geschaltet werden. Beim Einschaltvorgang kann vorteilhafterweise eine geringer Zeitversatz bzw. eine geringe Vorlaufzeit, d.h. N-Leiter wird beim Einschaltvorgang vor dem Phasenleiter (L) geschlossen, und/oder beim Ausschaltvorgang um ein geringen Zeitversatz bzw. Nachlaufzeit, d.h. N-Leiter wird nach dem Phasenleiter geöffnet, vorgesehen sein. Dies hat den besonderen Vorteil, dass die Belastung des N-Kontakts verringert wird und keine kritische Mehrbelastung des N-Leiter-Kontaktsystems entsteht, welche ansonsten zu Abbrand bzw. zum verschweißen von mechanischen Kontakten führen könnte. Hierbei kann beispielsweise vorteilhafterweise der N-Leiter mit einem schwächeren, kostengünstigerem Kontaktsystem ausgestattet werden.

In einer vorteilhaften Ausgestaltung der Erfindung ist der Stromkreis ein Dreiphasen-Wechselstromkreis inklusive einem Neutralleiter, kurz N-Leiter. Der Neutralleiter / N-Leiter weist dabei eine Serienschaltung eines mechanischen und eines elektronischen Schaltelementes auf und die Steuereinrichtung ist derart ausgestaltet, dass der Neutralleiter mit einem Zeitversatz zu den anderen Leitern respektive Phasenleitern bzw. Außenleitern (L1, L2, L3) geschalten werden kann. Bei Verwendung eines N-Leiters kann dieser mittels einer definierten bzw. minimalen Vorlaufzeit zu den Außenleitern (L1, L2, L3) geschalten werden. I. d. R. handelt es sich dabei beim Einschaltvorgang um eine geringe Vorlaufzeit, d.h. N-Leiter wird vor den Außenleitern geschlossen und beim Ausschaltvorgang um ein geringe Nachlaufzeit, d.h. N-Leiter wird nach den Außenleitern (L1, L2, L3) geöffnet. Dies hat den besonderen Vorteil, dass die Belastung des N-Kontakts geschont wird und nicht eine ggf. kritische Mehrbelastung des N-Leiter-Kontaktsystems entsteht, mit der Gefahr von Abbrand bzw. verschweißten mechanischen Kontakten. Zudem ergibt sich der Vorteil, dass Verbraucher mit stark unterschiedlicher Impedanz an den Außenleitern damit vor Überlastung geschützt werden. Handelt es sich bei dem mechanischen Schaltelement um ein Sprungschaltwerk so ist i.d.R. kein N-Vorlauf notwendig.

In einer vorteilhaften Ausgestaltung der Erfindung weist das elektronische Schaltelement ein Trennglied auf, das eine Trennung zwischen Stromkreis und Steuerkreis ermöglicht. Dies hat den besonderen Vorteil, dass Strom- und Steuerkreis getrennt sind, vorteilhafterweise galvanisch getrennt sind, wodurch eine erhöhte Sicherheit bzw. Isolationsfestigkeit ermöglicht wird.

In einer vorteilhaften Ausgestaltung der Erfindung weist das elektronische Schaltelement mindestens einen Triac, Thyristor, Leistungstransistor oder Feldeffekttransistor auf. Dies hat den besonderen Vorteil, dass sich dadurch die Möglichkeit von:
- AC- und/oder DC-Schalten,
- Platzsparender Realisierung eines elektronischen Schaltelements,
- Erreichung kurzer Abschaltzeiten,
- Unterstützung Schaltverhalten des mechanischen Schaltelements oder
- Zeitlich definierbare Ein-/Ausschaltzeitpunkte ergibt.

In einer vorteilhaften Ausgestaltung der Erfindung weist das elektronische Schaltelement Supressordioden oder Varistoren auf. Dies hat den besonderen Vorteil, dass ein Schutz gegen gefährliche Überspannungen realisiert werden kann, um einen Ausfall des elektronischen Schaltelements zu vermeiden.

In einer vorteilhaften Ausgestaltung der Erfindung ist der Stromkreis ein kombinierter Gleich- und Wechselstromkreis ist. Dies hat den besonderen Vorteil, dass eine Schalteinrichtung bzw. ein Schalter sowohl für Gleich- als auch für Wechselstrom zur Verfügung steht.

In einer vorteilhaften Ausgestaltung der Erfindung ist der Stromkreis ein Wechselstromkreis und die Steuereinrichtung derart ausgestaltet, dass das elektronische Schaltelement im Nulldurchgang des Wechselstromes niederohmig bzw. hochohmig wird bzw. schaltet, d.h. leitend bzw. nichtleitend wird respektive schließt bzw. öffnet. Dies hat den besonderen Vorteil, dass der Schaltvorgang besonders verlustarm im Nulldurchgang durchgeführt wird. Dadurch ist sehr geringe Belastung der Schaltelemente möglich und somit eine höhere Lebensdauer erzielbar.

Die Erfindung lässt sich besonders gut für bekannte Schalter einsetzen, wie Fehlerstromschutzschalter respektive RCD, Leitungsschutzschalter respektive MCB, Leistungsschalter respektive MCCB oder ACB, Brandschutzschalter respektive AFDD oder ähnlich. Dadurch können die vorhandenen Schalter für Gleichstromnetze verwendet werden bzw. das Schaltverhalten, insbesondere im dreiphasigen Wechselstromsystem ist verbessert, wodurch eine neue bzw. bessere Funktionalität zur Verfügung steht.

Alle Ausgestaltungen der Erfindung bewirken eine verbesserte Schalteinrichtung.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.
Figur 1 ein erstes Blockschaltbild einer erfindungsgemäßen Anordnung
Figur 2 ein zweites Blockschaltbild einer erfindungsgemäßen Anordnung
Figur 3 ein Blockschaltbild eines elektronischen Schaltelementes

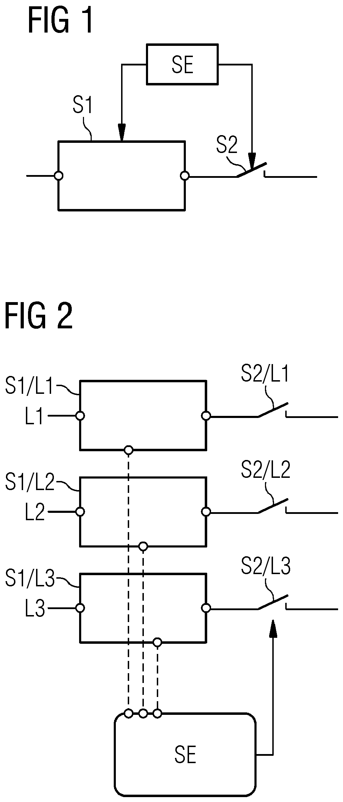

Figur 1 zeigt ein Blockschaltbild einer Schalteinrichtung für elektrische Stromkreise, insbesondere für Schalter für Niederspannungsanlagen, aufweisend eine Serienschaltung eines mechanischen Schaltelementes S2, das Schaltkontakte zur Trennung des elektrischen Stromkreises aufweist, und eines elektronischen Schaltelementes S1, das mit Halbleitern bzw. in Halbleitertopologie ausgeführt ist. Beide sind mit einer Steuereinrichtung SE verbunden sind. Dies ist derart ausgestaltet, dass bei einem Einschaltvorgang zuerst die Schaltkontakte des mechanischen Schaltelementes S2 geschlossen werden und anschließend das elektronische Schaltelement S1 schließt bzw. leitend wird bzw. niederohmig wird.

Bei einem Ausschaltvorgang öffnet zuerst das elektronische Schaltelement S1 bzw. wird nicht leitend bzw. hochohmig und anschließend öffnet das mechanische Schaltelement die Schaltkontakte. Optional kann das elektronische Schaltelement auch mit einem definierten Zeitversatz zum mechanischen Schaltelement abschalten. D.h. bei einem Abschaltvorgang öffnet zuerst das mechanische Schaltelement die Kontakte und anschließend wird das elektronische Schaltelement hochohmig.

Figur 2 zeigt eine Anordnung gemäß Figur 1, mit dem Unterschied, dass drei Phasen bzw. Leiter L1, L2, L3 eines Dreiphasen-Wechselstromkreises vorgesehen sind und dass pro Phase bzw. Leiter eine Serienschaltung eines mechanischen und eines elektronischen Schaltelementes vorgesehen ist. Für den Leiter L1 das elektronische Schaltelement S1/L1 und das mechanische Schaltelement S2/L1, für den Leiter L2 das elektronische Schaltelement S1/L2 und das mechanische Schaltelement S2/L2, für den Leiter L3 das elektronische Schaltelement S1/L3 und das mechanische Schaltelement S2/L3. Alle elektronischen und mechanischen Schaltelement S1, S2 sind mit einer Steuereinrichtung SE verbunden. Alternativ kann auch pro Phase eine Steuereinrichtung vorgesehen sein, wobei die Steuereinrichtungen untereinander verbunden sind. Alternativ kann auch weitere übergeordnete Steuereinrichtung vorgesehen sein, die die Steuereinrichtungen pro Phase steuert.

Die Steuerung ist derart ausgestaltet, dass bei einem Einschaltvorgang zuerst die Schaltkontakte der mechanischen Schaltelemente für alle Phasen geschlossen werden und anschließend die elektronischen Schaltelemente aller Phasen synchron niederohmig werden; bei einem Ausschaltvorgang zuerst die elektronischen Schaltelemente den Stromfluss aller Phasen synchron hochohmig und anschließend die mechanischen Schaltelemente aller Phasen die Schaltkontakte öffnen. Optional kann das elektronische/mechanische Schaltelement auch mit einem Zeitversatz, wie einem definierten, fest eingestellten oder einstellbaren Zeitversatz, zum mechanischen/elektronischen Schaltelement schalten.

Vorteilhafterweise kann das niederohmig und hochohmig werden des elektronischen Schaltelementes bei einem Wechselstromsystem im Nulldurchgang des Wechselstromes erfolgen, um die Verlustleistungen, insbesondere beim Schalten, zu reduzieren.

Alternativ kann auch eine Schalteinrichtung bzw. Schaltelemente für einen Neutralleiter vorgesehen sein.

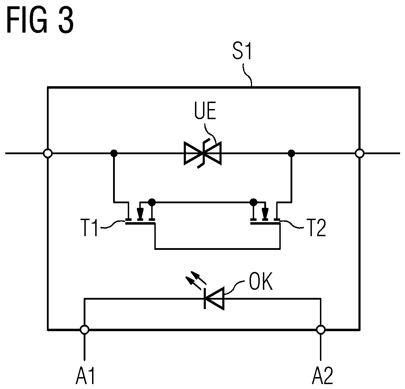

Figur 3 zeigt ein Beispiel für ein Blockschaltbild eines elektronischen Schaltelementes S1. Das elektronische Schaltelement S1 weist eine Serienschaltung zweier Transistoren T1, T2, beispielsweise Feldeffekttransitoren auf, die den elektrischen Stromkreis öffnen bzw. schließen, d.h. für eine niederohmige bzw. hochohmige Verbindung sorgen bzw. leitend bzw. nicht leitend sind. Alternativ können an Stelle der Transistoren auch ein oder mehrere Triacs, Thyristoren oder ähnliche Bauelemente eingesetzt werden. Gesteuert werden die Transistoren durch ein Trennglied OK, beispielsweise ein Optokoppler, mit Anschlüssen A1, A2, die mit einer Steuereinrichtung SE verbunden sind. Es sorgt dafür, dass der Steuerkreis vom Lastkreis bzw. elektrischen Stromkreis getrennt ist. Allerdings kann die Trennung auch entfallen. Das elektronische Schaltelement weist ferner einen Überspannungsschutz UE zwischen seinen Phasen bzw. Leitungsanschlüssen auf, beispielsweise in Form von Supressordioden oder Varistoren.

Das mechanische Schaltelement ist ein übliches Schaltelement mit mechanischen Kontakten, wie es aus der Schaltertechnik, insbesondere Niederspannungsschaltertechnik bekannt ist, und beispielsweise in Leitungsschutzschalter, Leistungsschaltern, Fehlerstromschutzschaltern, Brandschutzschaltern und anderen Schaltern verwendet wird.

Die Erfindung kann vorteilhafterweise in Fehlerstromschutzschaltern, Leitungsschutzschaltern, Leistungsschaltern, Brandschutzschaltern, Motorschutzschaltern u.ä. verwendet werden.

Mit niederohmig ist ein elektrisch leitender Zustand gemeint, bei dem eine möglichst geringe Verlustleistung auftritt. Beispielsweise kann niederohmig Widerstandswerte von kleiner 10 Ohm, 5 Ohm, 1 Ohm, 500 Milliohm, 100 Milliohm, 50 Milliohm, 10 Milliohm, 5 Milliohm, 1 Milliohm, 100 Mikroohm, 50 Mikroohm, 10 Mikroohm, 5 Mikroohm, 1 Mikroohm oder entsprechende kleinere Werte umfassen. Auch alle dazwischenliegenden Werte sind möglich.

Mit hochohmig ist ein elektrisch möglichst nichtleitender Zustand gemeint, bei dem der Stromfluss verringert wird bzw. ein möglichst geringer Stromfluss auftritt. Beispielsweise kann hochohmig Widerstandswerte von größer 100 Ohm, 500 Ohm, 1 Kiloohm, 5 Kiloohm, 10 Kiloohm, 50 Kiloohm, 100 Kiloohm, 500 Kiloohm, 1 Megaohm, 5 Megaohm, 10 Megaohm, 50 Megaohm, 100 Megaohm, 500 Megaohm, 1 Gigaohm, 5 Gigaohm, 10 Gigaohm, 50 Gigaohm, 100 Gigaohm oder entsprechend größere Werte umfassen. Auch alle dazwischenliegenden Werte sind möglich.

Im Folgenden wird die Erfindung noch einmal mit anderen Worten erläutert.

Gemäß Figur 1 Verwendung von zwei in Reihe geschalteten Schaltelementen, d.h. Erweiterung eines z.B. herkömmlichen mechanischen Kontaktsystems durch ein in Reihe geschaltetes, zusätzliches elektronisches Schaltelement. Vorzugsweise zur Abschaltung von Lasten in Gleichstromsystemen.

Gemäß Figur 2 synchrones Schalten der jeweiligen elektronischen Schaltelemente je Phase zur Vermeidung von transienten Ableitströmen, vorzugsweise zum gleichzeitgen Einschalten der Leiter bzw. Phasen im Wechselstromsystem.

Sofern ein N-Leiter vorhanden ist, sollte dessen Vor- oder/und Nachlauf berücksichtigt werden.

Die Erfindung findet insbesondere Anwendung in Niederspannungsschutzschaltgeräten, insbesondere Geräte mit rein netzspannungsabhängiger Arbeitsweise oder kombinierten Geräten mit netzspannungsunabhängigen und netzspannungsabhängigen Funktionseinheiten.

Arbeitsweise:
A) Abschaltvorgang, insbesondere für DC-Ströme:
   Das elektronische Schaltelement S1 wird genutzt, um beim Abschaltvorgang den normalerweise entstehenden Lichtbogen im mechanischen Schaltelement S2 zu beherrschen. Dazu kann mit einem einstellbaren/definierbaren Zeitversatz t zwischen S1 und S2 der Abschaltvorgang kontrolliert und unterstützend durch S1 vorgenommen werden. Die Lichtbogenbelastung an S2 wird dadurch minimiert.
B) Einschaltvorgang, insbesondere für gleichzeitiges Schließen der Leiter eines Drehstromverbrauchers, beispielsweise mit EMV-Filtern:
   Um gleichzeitiges Zuschalten aller Leiter eines DrehstromVerbrauchers (incl. EMV-Filter) zu ermöglichen, wird bei offenem elektronischen Schaltelement S1 das mechanische Schaltelement S2 geschlossen. Danach wird durch schließen des elektronischen Schaltelements S1 der Stromkreis geschlossen, womit ein unsymmetrisches zeitversetztes Schließen mechanischer Kontakte der verschiedenen Leiter vermieden wird.

Das elektronische Schaltelement ist zumindest teilweise elektronisch ausgeführt, basierend auf Halbleitertechnologie. Der Steuer- und Lastkreis ist ausgeführt durch ein geeignetes Trennglied, wie z.B. einen Optokoppler. Auf der Lastseite befindet sich ein elektronisches Schaltelement auf Basis Triac, Thyristor oder Leistungstransistor(en) bzw. (Leistungs-)Feldeffekttransistoren. Damit können mit einem Steuerimpulses Gleich- und/oder Wechselstromkreise Ein- und Ausgeschalten werden.

Durch die Kombination eines Halbleiter-Schaltelements mit einer geeigneten Steuerschaltung ergibt sich ein elektronisches Schaltelement. Zum Überspannungsschutz können Supressordioden, Varistoren, etc. verwendet werden.

Der Vorteil der Erfindung liegt in der Kombination beider Schaltelemente zur Beherrschung des Lichtbogens beim DC-Schalten bzw. für gleichzeitiges Schließen von AC-Stromkreisen, insbesondere für Niederspannungsschutzschaltgeräte.

Es ergibt sich ferner der Vorteile, dass eine platzsparende Realisierung einer Schalteinrichtung, insbesondere für Gleichstrom, möglich ist, da rein mechanische DC-Schalter i.d.R. sehr aufwendig sind und Schaltelemente inkl. Lichtbogenlöschkammer(n) beinhalten.

Des Weiteren lässt sich durch die Kombination der beschriebenen Schaltelemente eine kurze Abschaltzeit und eine entsprechende Trennstrecke der Kontakte nach dem Öffnen erzielen. Das elektronische Schaltelement S1 übernimmt die rasche Unterbrechung des Stromflusses inklusive Lichtbogenlöschung. Das mechanische Schaltelement stellt die geforderte Trennstrecke nach Öffnen sicher.

Durch die Kombination der beschriebenen Schaltelemente lassen sich insbesondere für die Anwendung in Drehstromkreisen gleichzeitige Kontaktgaben der Außenleiter und außerdem belastungsarme (Kontaktmaterial schonende) Einschaltvorgänge erzielen. Das elektronische Schaltglied übernimmt dabei die effektive Lastschaltung und entlastet das in Reihe liegende mechanische Schaltelement.

Es gibt die Möglichkeit, je nach Aufwand und Ausführungsart, das elektronischen Schaltelements so auszuführen, dass
- nur DC-Stromkreise (Polung beachten)
- nur AC-Stromkreise
   oder
- universell AC und DC-Stromkreise
   bedient werden können.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Alte Patentansprüche der Stammanmeldung als Offenbarungsgehalt der ursprünglichen Anmeldung
1. Schalteinrichtung für elektrische Stromkreise, insbesondere für Schalter für Niederspannungsanlagen, aufweisend eine Serienschaltung
   - eines mechanischen Schaltelementes (S2), das Schaltkontakte zur Trennung des elektrischen Stromkreises aufweist, und
   - eines elektronischen Schaltelementes (S1), das mit Halbleitern ausgeführt ist,
      die beide mit einer Steuereinrichtung (SE) verbunden sind,
      die derart ausgestaltet ist,
      dass bei einem Einschaltvorgang zuerst die Schaltkontakte des mechanischen Schaltelementes (S2) geschlossen werden und anschließend das elektronische Schaltelement (S1) niederohmig wird,
      dass bei einem Ausschaltvorgang zuerst das elektronische Schaltelement (S1) hochohmig wird und anschließend das mechanische Schaltelement (S2) die Schaltkontakte öffnet.
2. Schalteinrichtung nach Patentanspruch 1,
   dadurch gekennzeichnet,
   dass der Stromkreis ein Gleichstromkreis ist.
3. Schalteinrichtung nach Patentanspruch 1,
   dadurch gekennzeichnet,
   dass der Stromkreis ein Dreiphasen-Wechselstromkreis ist, dass pro Phase (L1, L2, L3) eine Serienschaltung eines mechanischen (S2/L1, S2/L2, S2/L3) und eines elektronischen Schaltelementes (S1/L1, S1/L2, S1/L3) vorgesehen ist,
   die mit einer oder mehrerer Steuereinrichtungen (SE) verbunden sind, die derart ausgestaltet ist/sind,
   dass bei einem Einschaltvorgang zuerst die Schaltkontakte der mechanischen Schaltelemente (S2/L1, S2/L2, S2/L3) für alle Phasen geschlossen werden und anschließend die elektronischen Schaltelemente (S1/L1, S1/L2, S1/L3) aller Phasen synchron niederohmig werden,
   dass bei einem Ausschaltvorgang zuerst die elektronischen Schaltelemente (S1/L1, S1/L2, S1/L3) den Stromfluss aller Phasen synchron hochohmig und anschließend die mechanischen Schaltelemente (S2/L1, S2/L2, S2/L3) aller Phasen die Schaltkontakte öffnen.
4. Schalteinrichtung nach Patentanspruch 3,
   dadurch gekennzeichnet,
   dass alle Schaltelemente mit einer Steuereinrichtung (SE) verbunden sind.
5. Schalteinrichtung nach Patentanspruch 3 oder 4,
   dadurch gekennzeichnet,
   dass der Neutralleiter eine Serienschaltung eines mechanischen und eines elektronischen Schaltelementes aufweist und die Steuereinrichtung derart ausgestaltet ist, dass der Neutralleiter in analoger Weise geschaltet wird.
6. Schalteinrichtung nach einem der vorhergehenden Patentansprüche,
   dadurch gekennzeichnet,
   dass das elektronische Schaltelement (S1) ein Trennglied (OK) aufweist, das eine Trennung zwischen Stromkreis und Steuerkreis herbeiführt.
7. Schalteinrichtung nach einem der vorhergehenden Patentansprüche,
   dadurch gekennzeichnet,
   dass das elektronische Schaltelement (S1) mindestens einen Triac, Thyristor, Leistungstransistor oder Feldeffekttransistor (T1, T2) aufweist.
8. Schalteinrichtung nach einem der vorhergehenden Patentansprüche,
   dadurch gekennzeichnet,
   dass das elektronische Schaltelement (S1) Supressordioden oder Varistoren (UE) aufweist.
9. Schalteinrichtung nach einem der vorhergehenden Patentansprüche,
   dadurch gekennzeichnet,
   dass der Stromkreis ein kombinierter Gleich- und Wechselstromkreis ist.
10. Schalteinrichtung nach einem der vorhergehenden Patentansprüche,
   dadurch gekennzeichnet,
   dass der Stromkreis ein Wechselstromkreis ist und das die Steuereinrichtung derart ausgestaltet ist, dass das elektronische Schaltelement (S1) bei einem Schaltvorgang im Nulldurchgang des Wechselstromes niederohmig bzw. hochohmig wird.
11. Schalteinrichtung nach einem der vorhergehenden Patentansprüche,
   dadurch gekennzeichnet,
   dass bei einem Ausschaltvorgang zuerst das mechanische Schaltelement (S2) die Schaltkontakte öffnet und anschließend das elektronische Schaltelement (S1) hochohmig wird.
12. Schalteinrichtung nach einem der vorhergehenden Patentansprüche,
   dadurch gekennzeichnet,
   dass die Schaltelemente (S1, S2) mit einem Zeitversatz öffnen oder/und schließen.
13. Fehlerstromschutzschalter, aufweisend eine Schalteinrichtung nach einem der vorhergehenden Patentansprüche 1 bis 12.
14. Leitungsschutzschalter, aufweisend eine Schalteinrichtung nach einem der vorhergehenden Patentansprüche 1 bis 12.
15. Leistungsschalter, aufweisend eine Schalteinrichtung nach einem der vorhergehenden Patentansprüche 1 bis 12.
16. Brandschutzschalter, aufweisend eine Schalteinrichtung nach einem der vorhergehenden Patentansprüche 1 bis 12.
17. Motorschutzschalter, aufweisend eine Schalteinrichtung nach einem der vorhergehenden Patentansprüche 1 bis 12.

## Patentansprüche

1. Brandschutzschalter, insbesondere für Niederspannungsanlagen, mit einer Schalteinrichtung für den elektrischen Stromkreis aufweisend eine Serienschaltung
- eines mechanischen Schaltelementes (S2), das Schaltkontakte zur Trennung des elektrischen Stromkreises aufweist, und
- eines elektronischen Schaltelementes (S1), das mit Halbleitern ausgeführt ist,
die beide mit einer Steuereinrichtung (SE) verbunden sind, die derart ausgestaltet ist,
dass bei einem Einschaltvorgang zuerst die Schaltkontakte des mechanischen Schaltelementes (S2) geschlossen werden und anschließend das elektronische Schaltelement (S1) niederohmig wird,
dass bei einem Ausschaltvorgang zuerst das elektronische Schaltelement (S1) hochohmig wird und anschließend das mechanische Schaltelement (S2) die Schaltkontakte öffnet.

2. Brandschutzschalter nach Patentanspruch 1,
**dadurch gekennzeichnet,**
**dass** der Stromkreis ein Gleichstromkreis ist.

3. Brandschutzschalter nach Patentanspruch 1,
**dadurch gekennzeichnet,**
**dass** der Stromkreis ein Dreiphasen-Wechselstromkreis ist, dass pro Phase (L1, L2, L3) eine Serienschaltung eines mechanischen (S2/L1, S2/L2, S2/L3) und eines elektronischen Schaltelementes (S1/L1, S1/L2, S1/L3) vorgesehen ist,
die mit einer oder mehrerer Steuereinrichtungen (SE) verbunden sind, die derart ausgestaltet ist/sind,
**dass** bei einem Einschaltvorgang zuerst die Schaltkontakte der mechanischen Schaltelemente (S2/L1, S2/L2, S2/L3) für alle Phasen geschlossen werden und anschließend die elektronischen Schaltelemente (S1/L1, S1/L2, S1/L3) aller Phasen synchron niederohmig werden,
**dass** bei einem Ausschaltvorgang zuerst die elektronischen Schaltelemente (S1/L1, S1/L2, S1/L3) den Stromfluss aller Phasen synchron hochohmig und anschließend die mechanischen Schaltelemente (S2/L1, S2/L2, S2/L3) aller Phasen die Schaltkontakte öffnen.

4. Brandschutzschalter nach Patentanspruch 3,
**dadurch gekennzeichnet,**
**dass** alle Schaltelemente mit einer Steuereinrichtung (SE) verbunden sind.

5. Brandschutzschalter nach Patentanspruch 3 oder 4,
**dadurch gekennzeichnet,**
**dass** der Neutralleiter eine Serienschaltung eines mechanischen und eines elektronischen Schaltelementes aufweist und die Steuereinrichtung derart ausgestaltet ist, dass der Neutralleiter in analoger Weise geschaltet wird.

6. Brandschutzschalter nach einem der vorhergehenden Patentansprüche,
**dadurch gekennzeichnet,**
**dass** das elektronische Schaltelement (S1) ein Trennglied (OK) aufweist, das eine Trennung zwischen Stromkreis und Steuerkreis herbeiführt.

7. Brandschutzschalter nach einem der vorhergehenden Patentansprüche,
**dadurch gekennzeichnet,**
**dass** das elektronische Schaltelement (S1) mindestens einen Triac, Thyristor, Leistungstransistor oder Feldeffekttransistor (T1, T2) aufweist.

8. Brandschutzschalter nach einem der vorhergehenden Patentansprüche,
**dadurch gekennzeichnet,**
**dass** das elektronische Schaltelement (S1) Supressordioden oder Varistoren (UE) aufweist.

9. Brandschutzschalter nach einem der vorhergehenden Patentansprüche,
**dadurch gekennzeichnet,**
**dass** der Stromkreis ein kombinierter Gleich- und Wechselstromkreis ist.

10. Brandschutzschalter nach einem der vorhergehenden Patentansprüche,
**dadurch gekennzeichnet,**
**dass** der Stromkreis ein Wechselstromkreis ist und das die Steuereinrichtung derart ausgestaltet ist, dass das elektronische Schaltelement (S1) bei einem Schaltvorgang im Nulldurchgang des Wechselstromes niederohmig bzw. hochohmig wird.

11. Brandschutzschalter nach einem der vorhergehenden Patentansprüche,
**dadurch gekennzeichnet,**
**dass** die Schaltelemente (S1, S2) mit einem Zeitversatz öffnen oder/und schließen.

12. Brandschutzschalter nach einem der vorhergehenden Patentansprüche,
**dadurch gekennzeichnet,**
**dass** der Stromkreis ein Wechselstromkreis ist und dass der Neutralleiter mit einem Zeitversatz zu dem(n) anderen Phasenleiter(n) respektive Außenleiter(n) (L1, L2, L3) geschaltet wird.

13. Brandschutzschalter nach Patentanspruch 12,
**dadurch gekennzeichnet,**
**dass** der Neutralleiter beim Einschaltvorgang mit einer geringen Vorlaufzeit geschaltet wird, der Neutralleiter wird vor dem(n) Außenleiter(n) geschlossen,
beim Ausschaltvorgang mit einer geringen Nachlaufzeit geschaltet wird, der Neutralleiter wird nach dem(n) Außenleiter(n) (L1, L2, L3) geöffnet
